# EUROPEAN PATENT APPLICATION

(11) **EP 4 811 758 A1**
(43) Date of publication of application: **23.09.2026**
(21) Application number: 23958826.2
(22) Date of filing: 14.11.2023
(51) Int. Cl.: H04M 11/04, G08B 13/00, G08B 25/00

(54) **MONITORING DEVICE, MONITORING METHOD, AND MONITORING PROGRAM**

(71) Applicant: Pioneer Corporation, Tokyo 113-0021 (JP)
(72) Inventor: FUJIE, Tetsuya, Kawagoe-shi, Saitama 350-8555 (JP)
(74) Representative: Hoffmann Eitle
(86) International application number: PCT/JP2023/040969
(87) International publication number: WO 2025/104817

(57) **Abstract**

A monitoring apparatus (100) includes an acquisition unit (122) that acquires coordinates of a moving object that are identified based on information that is detected by a motion sensor that is installed in a vehicle, a directional risk calculation unit (123) that calculates a risk value related to a traveling direction of the moving object based on the coordinates of the moving object that are acquired by the acquisition unit (122), and a determination unit (125) that determines presence or absence of danger in accordance with the risk value that is related to the traveling direction of the moving object and that is calculated by the directional risk calculation unit (123).

## Description

### Field

The present invention is related to a monitoring apparatus, a monitoring method, and a monitoring program. Background

Conventionally, a technology for determining safety of a vehicle and calling for attention or issuing a warning before an illegal act is committed, to thereby preventing damage on the vehicle is known (for example, Patent Literature 1).

### Citation List

### Patent Literature

Patent Literature 1: Japanese Laid-open Patent Publication No. 2013-228912

### Summary

### Technical Problem

However, with the conventional technology, in some cases, it is difficult to accurately determine presence or absence of danger to the vehicle. For example, when the determination is performed by using only a distance between a person and the vehicle, in some cases, it may be determined that danger is absent even in a situation in which the vehicle is in danger. Further, for example, in some cases, it may be determined that danger is present in a situation in which a person just passes by the vehicle. Thus, the problem as described above is one example of a problem to be solved by the present invention. Solution to Problem

A monitoring apparatus according to claim 1 includes an acquisition unit that acquires coordinates of a moving object that are identified based on information that is detected by a motion sensor that is installed in a vehicle; a directional risk calculation unit that calculates a risk value related to a traveling direction of the moving object based on the coordinates of the moving object that are acquired by the acquisition unit; and a determination unit that determines presence or absence of danger in accordance with the risk value that is related to the traveling direction of the moving object and that is calculated by the directional risk calculation unit.

A monitoring method according to claim 9 is a method executed by a monitoring apparatus, the method comprising acquiring coordinates of a moving object that are identified based on information that is detected by a motion sensor that is installed in a vehicle; calculating a risk value related to a traveling direction of the moving object based on the coordinates of the moving object that are acquired at the acquiring; and determining presence or absence of danger in accordance with the risk value that is related to the traveling direction of the moving object and that is calculated at the calculating.

A monitoring program according to claim 10 causes a computer to execute acquiring coordinates of a moving object that are identified based on information that is detected by a motion sensor that is installed in a vehicle; calculating a risk value related to a traveling direction of the moving object based on the coordinates of the moving object that are acquired at the acquiring; and determining presence or absence of danger in accordance with the risk value that is related to the traveling direction of the moving object and that is calculated at the calculating.

### Brief Description of Drawings

FIG. 1 is a diagram illustrating an example of a problem with the conventional technology.
FIG. 2 is a diagram illustrating an example of a configuration of a monitoring apparatus according to one embodiment.
FIG. 3 is a diagram illustrating an example of a directional risk calculation process that is performed by the monitoring apparatus according to one embodiment.
FIG. 4 is a flowchart illustrating an example of the flow of the directional risk calculation process that is performed by the monitoring apparatus according to one embodiment.
FIG. 5 is a diagram illustrating an example of a positional risk calculation process that is performed by the monitoring apparatus according to one embodiment.
FIG. 6 is a diagram illustrating an example of the positional risk calculation process that is performed by the monitoring apparatus according to one embodiment.
FIG. 7 is a flowchart illustrating an example of the flow of the positional risk calculation process that is performed by the monitoring apparatus according to one embodiment.
FIG. 8 is a diagram illustrating an example of a determination process that is performed by the monitoring apparatus according to one embodiment.
FIG. 9 is a flowchart illustrating an example of the flow of a process that is performed by the monitoring apparatus according to one embodiment.
FIG. 10 is a diagram illustrating an example of a configuration of the monitoring apparatus according to one embodiment.
FIG. 11 is a diagram illustrating an example of a change process that is performed by the monitoring apparatus according to one embodiment.
FIG. 12 is a diagram illustrating an example of the change process that is performed by the monitoring apparatus according to one embodiment.
FIG. 13 is a flowchart illustrating an example of the flow of a process that is performed by the monitoring apparatus according to one embodiment.
FIG. 14 is a diagram illustrating an example of a configuration of a monitoring apparatus system according to one embodiment.
FIG. 15 is a diagram illustrating an example of a configuration of the monitoring apparatus according to one embodiment.
FIG. 16 is a hardware configuration diagram illustrating one example of a computer that implements functions of the monitoring apparatus.

### Description of Embodiments

Modes (hereinafter, embodiments) for carrying out the present invention will be described below with reference to the drawings. Meanwhile, the present invention is not limited by the embodiments described below. In addition, in description of the drawings, the same components are denoted by the same reference symbols.

### First Embodiment

### 1. Overview

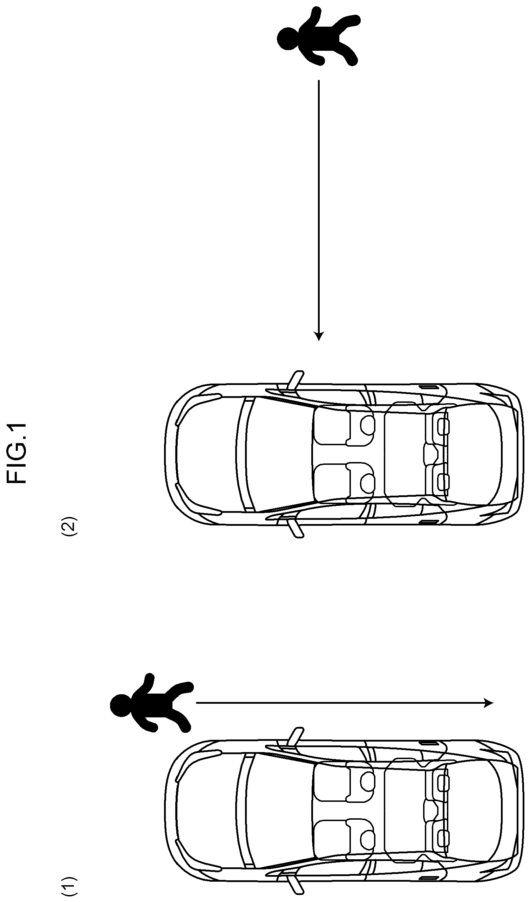

An overview of a monitoring apparatus 100 according to a first embodiment will be described below. The monitoring apparatus 100 is an apparatus that determines presence or absence of danged to a vehicle. One example of a problem with the conventional technology will be described below with reference to FIG. 1. FIG. 1 is a diagram for explaining an example of a problem with the conventional technology. Conventionally, to prevent a crime, such as a vehicle theft or a vehicle break-in, on a parked vehicle, the parked vehicle is monitored. In some cases, an apparatus or the like that monitors the parked vehicle as described above may determine a possibility of danger to the vehicle from information on a distance between the vehicle and a moving object.

However, when it is determined whether there is a possibility of danger to the vehicle from the information on the distance between the vehicle and the moving object, in some cases, determination that does not match an actual situation may be performed. For example, as illustrated in FIG. 1(1), it may be determined that danger is present in a situation in which the moving object passes by the side of the vehicle. Further, for example, as illustrated in FIG. 1(2), it may be determined that danger is present in a situation in which the moving object located away from the vehicle moves toward the vehicle.

To cope with this, the monitoring apparatus 100 determines presence or absence of danger in accordance with a risk value related to a traveling direction of the moving object, which is calculated from coordinates of the moving object. For example, the monitoring apparatus 100 acquires the coordinates of the moving object that are identified based on information that is detected by a motion sensor that is installed in the vehicle, identifies a risk related toa traveling direction of the moving object based on the acquired coordinates of the moving object, and determines presence or absence of danger in accordance with a risk value related to the traveling direction of the moving object. With this configuration, the monitoring apparatus 100 is able to determine presence or absence of danger to the vehicle with high accuracy. As for monitoring according to one embodiment described below, an example will be described in which only the monitoring apparatus 100 performs the monitoring.

### 2. Configuration of monitoring apparatus

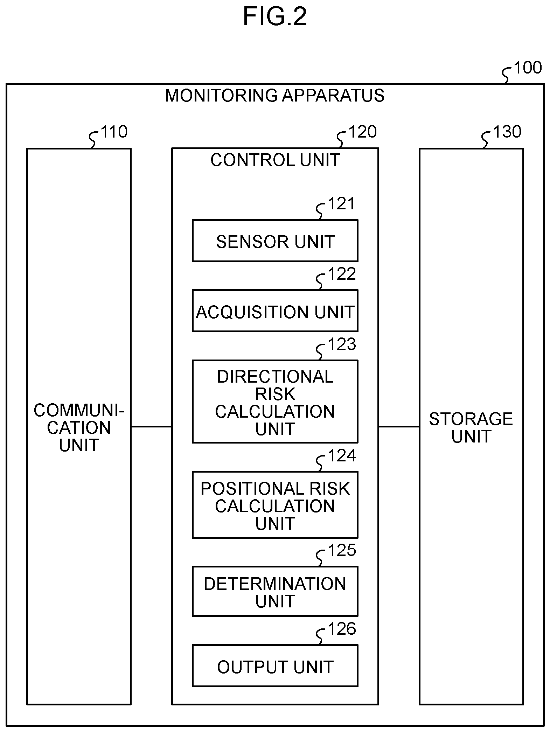

The monitoring apparatus 100 according to one embodiment will be described below with reference to FIG. **2.** FIG. 2 is a diagram illustrating a configuration example of the monitoring apparatus 100 according to one embodiment. As illustrated in FIG. 2, the monitoring apparatus 100 includes a communication unit 110, a storage unit 130, and a control unit 120. In the following, each of the units included in the monitoring apparatus 100 will be described.

The communication unit 110 is implemented by, for example, a Network Interface Card (NIC) or the like The communication unit 110 is connected to a network N in a wired or wireless manner, and transmits and receives information to and from, for example, an in-vehicle apparatus 10.

The storage unit 130 is implemented by, for example, a semiconductor memory device, such as a Random Access Memory (RAM) or a flash memory, or a storage device, such as a hard disk or an optical disk. The storage unit 130 stores therein an installation position of a motion sensor, intensity of a signal to be transmitted, signal reception sensitivity, intensity of a received signal, an angle calculated from a received signal, a distance, coordinates of a moving object, a traveling direction, a risk related to a traveling direction of the moving object, a risk related to a position of the moving object, a threshold, an interval, a period, information on a size of the vehicle (a body type, a vehicle model, or the like), a mounting position of the motion sensor, information on a notification (notification setting, user terminal information, address information, or the like, an image (including a moving image and a still image), and other information that is needed to determine presence or absence of danger and determine a behavior.

The control unit 120 is implemented by using a Central Processing Unit (CPU), a Network Processor (NP), a Field Programmable Gate Array (FPGA), or the like, and executes a processing program that is stored in a memory. As illustrated in FIG. 2, the control unit 120 includes a sensor unit 121, an acquisition unit 122, a directional risk calculation unit 123, a positional risk calculation unit 124, a determination unit 125, and an output unit 126. Each of the units included in the control unit 120 will be described below.

The sensor unit 121 detects (acquires) information by various kinds of sensors. For example, the sensor unit 121 detects a moving object by a motion sensor, such as a distance sensor, a microwave sensor, or a light detection and ranging (LiDAR). Further, the sensor unit 121 detects a position of the vehicle by a positioning sensor, such as a Global Navigation Satellite System (GNSS) sensor or a Global Positioning System (GPS) sensor. Furthermore, the sensor unit 121 detects acceleration of the vehicle by an acceleration sensor. Moreover, for example, the sensor unit 121 detects an angular velocity of the vehicle by a gyro sensor. Furthermore, for example, the sensor unit 121 acquires an image (a moving image or a still image) around the vehicle by an image capturing apparatus.

The acquisition unit 122 acquires coordinates of a moving object that are identified based on information that is detected by a motion sensor that is installed in the vehicle. For example, the acquisition unit 122 analyzes a signal that is received by the motion sensor that is installed on a rearview mirror, and acquires the coordinates of the moving object that are identified from information on a distance and an angle. Here, the rear-view mirror is described as one example of the installation position of the motion sensor; however, for example, the motion sensor may be installed around the rear-view mirror or installed on a side mirror. In other words, the motion sensor may be installed on a part inside the vehicle, such as a front pillar, a center pillar, a rear pillar, a rear-view mirror, a side mirror, a ceiling, a seat, or a rear window, depending on purpose.

The directional risk calculation unit 123 calculates a risk value related to a traveling direction of the moving object based on the coordinates of the moving object that are acquired by the acquisition unit 122. For example, the directional risk calculation unit 123 identifies the traveling direction of the moving object from coordinates of two or more consecutive points of the moving object that are acquired by the acquisition unit 122, and calculates the risk value related to the traveling direction of the moving object from the traveling direction of the moving object at predetermined intervals. Calculation of the risk value related to the traveling direction of the moving object the directional risk calculation unit 123 will be described in detail later in the following section of 3. Directional risk calculation process.

The positional risk calculation unit 124 calculates a risk value related to a position of the moving object based on the coordinates of the moving object that are acquired by the acquisition unit 122. For example, the positional risk calculation unit 124 calculates the risk value related to the position of the moving object in accordance with the distance between the motion sensor and the moving object at predetermined intervals. Calculation of the risk value related to the position of the moving object by the positional risk calculation unit 124 will be described in detail later in the following section of 4. Positional risk calculation process.

The positional risk calculation unit 124 calculates the risk value related to the position of the moving object such that the risk related to the position of the moving object linearly decreases with increase in the distance between the motion sensor and the moving object in a predetermined distance range between the motion sensor and the moving object. For example, when the distance between the motion sensor and the moving object is in a range from 100 centimeters (cm) to 180 cm, the positional risk calculation unit 124 calculates the risk value related to the position of the moving object such that the risk related to the position of the moving object linearly decreases with increase in the distance between the motion sensor and the moving object. Meanwhile, the distance range from 100 cm to 180 cm as described above is one example, and a range in which the risk related to the position of the moving object linearly decreases with increase in the distance between the motion sensor and the moving object may be changed to a certain value depending on purpose.

The determination unit 125 determines presence or absence of danger in accordance with the risk value that is related to the traveling direction of the moving object and that is calculated by the directional risk calculation unit 123. For example, when an integrated value (total value) of the risk that is related to the traveling direction of the moving object and that is calculated by the directional risk calculation unit 123 at predetermined intervals in a predetermined period exceeds a predetermined threshold, the determination unit 125 determines that danger is present. More specifically, when an integrated value of the risk that is related to the traveling direction of the moving object and that is calculated by the directional risk calculation unit 123 at intervals of 50 milliseconds in a period of 0.5 second is 16 in a period of 0.5 second, and when the integrated value exceeds a predetermined threshold of "10", the determination unit 125 determines that danger is present.

The determination unit 125 determines presence or absence of danger in accordance with the risk value that is related to the traveling direction of the moving object and that is calculated by the directional risk calculation unit 123 and in accordance with the risk value that is related to the position of the moving object and that is calculated by the positional risk calculation unit 124. For example, when an integrated value of a value that is obtained by multiplying the risk that is related to the traveling direction of the moving object and that is calculated by the directional risk calculation unit 123 at predetermined intervals and the risk value that is related to the position of the moving object and that is calculated by the positional risk calculation unit 124 at predetermined intervals in a predetermined period exceeds a predetermined threshold, the determination unit 125 determines that danger is present.

More specifically, when an integrated value of a value that is obtained by multiplying the risk that is related to the traveling direction of the moving object and that is calculated by the directional risk calculation unit 123 at intervals of 50 milliseconds and the risk that is related to the position of the moving object and that is calculated by the positional risk calculation unit 124 at intervals of 50 milliseconds in a period of 0.5 second is 11, and when the integrated value exceeds the predetermined threshold of "10", the determination unit 125 determines that danger is present.

In other words, when the moving object approaches the vehicle, the determination unit 125 determines that danger is present because the risk value related to the traveling direction of the moving object and the risk value related to the position of the moving object increase, and, when the moving object moves away from the vehicle, the determination unit 125 determines that danger is absent because the risk value related to the traveling direction of the moving object and the risk value related to the position of the moving object decrease. In addition, when the moving object does not approach the vehicle, the determination unit 125 is able to determine that danger is absent because the risk value related to the traveling direction of the moving object and the risk value related to the position of the moving object do not increase.

Furthermore, the determination unit 125 is able to use the risk value related to the traveling direction of the moving object and the risk value related to the position of the moving object for classification of the moving object, in addition to determination on presence or absence of danger. For example, the determination unit 125 classifies the moving object from a change in the risk value related to the traveling direction of the moving object and a change in the risk value related to the position of the moving object per unit time.

More specifically, when a fluctuation rate of the risk value related to the traveling direction of the moving object exceeds a predetermined threshold and a fluctuation rate of the risk value related to the position of the moving object is equal to or smaller than a predetermined threshold, it is assumed that the moving object moves in various directions within a predetermined range, and therefore, the determination unit 125 classifies the moving object as grass or a tree. The grass and the tree are described as examples of the classification of the moving object, but, for example, the determination unit 125 classifies the moving object into a classifiable object, such as rain or a flag, based on characteristics of the change in the risk value related to the traveling direction of the moving object and the change in the risk value related to the position of the moving object per unit time.

When determining that danger is present, the determination unit 125 determines a behavior of the moving object in accordance with the risk value that is related to the traveling direction of the moving object and that is calculated by the directional risk calculation unit 123 and the risk value that is related to the position of the moving object and that is calculated by the positional risk calculation unit 124. For example, when it is determined that danger is present, the determination unit 125 determines that the behavior of the moving object is approach when the integrated value of the risk value that is related to the traveling direction of the moving object and that is calculated by the directional risk calculation unit 123 and the risk value that is related to the position of the moving object and that is calculated by the positional risk calculation unit 124 is equal to or larger than a first threshold and smaller than a second threshold, and determines that the behavior of the moving object as reconnaissance when the integrated value exceeds the second threshold.

For example, when it is determined that danger is present, the determination unit 125 determines that the behavior of the moving object is approach when the integrated value that is obtained by multiplying the risk value that is related to the traveling direction of the moving object and that is calculated by the directional risk calculation unit 123 at predetermined intervals and the risk value that is related to the position of the moving object and that is calculated by the positional risk calculation unit 124 at predetermined intervals in a predetermined period is equal to or larger than the first threshold and smaller than the second threshold, and determines that the behavior of the moving object is reconnaissance when the integrated value exceeds the second threshold.

More specifically, when it is determined that danger is present, and if an integrated value of a certain value, which is obtained by multiplying the risk value that is related to the traveling direction of the moving object and that is calculated by the directional risk calculation unit 123 at intervals of 50 milliseconds and the risk value that is related to the position of the moving object and that is calculated by the positional risk calculation unit 124 at intervals of 50 milliseconds, in a period of 1.5 seconds is 55 that is larger than the first threshold of **"30"** and smaller than the second threshold of "60", the determination unit 125 determines that the behavior of the moving object is approach.

As another example, when it is determined that danger is present, and if an integrated value of a certain value, which is obtained by multiplying the risk value that is related to the traveling direction of the moving object and that is calculated by the directional risk calculation unit 123 at intervals of 50 milliseconds and the risk value that is related to the position of the moving object and that is calculated by the positional risk calculation unit at intervals of 50 milliseconds, in a period of 1.5 seconds is 72 that is larger than the second threshold of "60", the determination unit 125 determines that the behavior of the moving object is reconnaissance.

Furthermore, when the coordinates of the moving object that are acquired by the acquisition unit 122 fall within a range of the vehicle, the determination unit 125 determines the behavior of the moving object as intrusion into the vehicle. For example, when it is determined that danger is present, and if an X-coordinate of the moving object that is acquired by the acquisition unit 122 falls within the X-axis range of the vehicle and a Y-coordinate of the moving object that is acquired by the acquisition unit 122 falls within the Y-axis range of the vehicle, the determination unit 125 determines that the behavior of the moving object is intrusion into the vehicle.

Meanwhile, in determination of the behavior of the moving object, when the coordinates of the moving object move away from the vehicle, the determination unit 125 re-determines that danger is absent. For example, even when it is determined that danger is present, if the coordinates of the moving object move in a direction away from the vehicle, the determination unit 125 is able to determine that danger is absent.

The determination unit 125 changes the first threshold and the second threshold in accordance with a place where the vehicle including the motion sensor is located. For example, the determination unit 125 acquires location information on the vehicle from a GPS or the like, and if the vehicle is located in a crowded place, the determination unit 125 increases the first threshold and the second threshold. In contrast, the determination unit 125 acquires the location information on the vehicle from a GPS or the like, and if the vehicle is located in a quiet place, the determination unit 125 decreases the first threshold and the second threshold.

The determination unit 125 changes the first threshold and the second threshold in accordance with time. For example, The determination unit 125 increases the first threshold and the second threshold in a period of time when it is expected to be crowded. In contrast, the determination unit 125 decreases the first threshold and the second threshold in a period of time when it is expected to be quiet.

The output unit 126 performs predetermined output in accordance with the behavior of the moving object that is determined by the determination unit 125. For example, when the determination unit 125 determines that the behavior of the moving object is approach, the output unit 126 gives a notice to a user terminal, which is registered in advance, that the moving object is approaching the vehicle. Meanwhile, the notice to the user terminal includes those, such as an e-mail, a call, or application notification, that may be performed by using a function that is included in the user terminal. At this time, the output unit 126 may transmit an image that is captured by an image capturing apparatus, such as a camera, that is included in the vehicle to the user terminal.

Furthermore, for example, when the determination unit 125 determines that the behavior of the moving object is reconnaissance, the output unit 126 issues an alarm by sound or light around the vehicle. Meanwhile, when the determination unit 125 determines that the behavior of the moving object is reconnaissance, the output unit 126 is able to simultaneously perform a predetermined output process that is performed when the behavior is determined as approach.

### 3. Directional risk calculation process

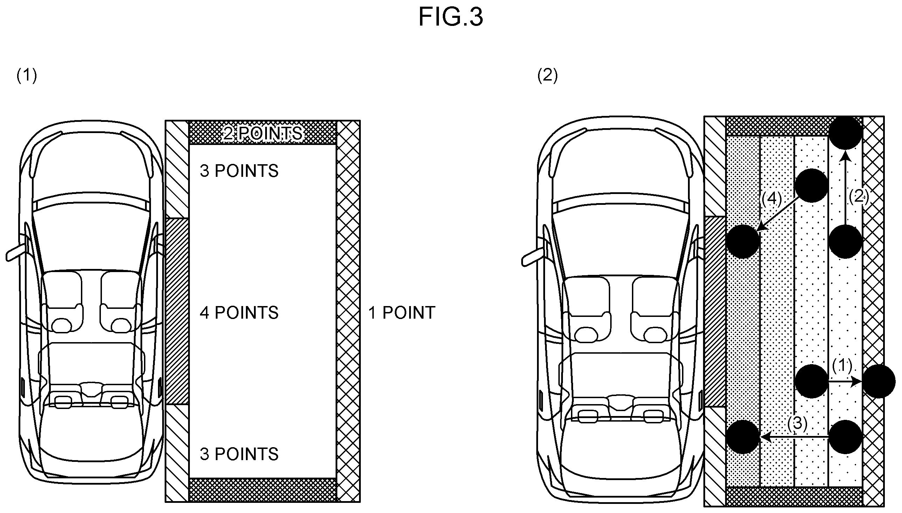

An example of a directional risk calculation process that is performed by the monitoring apparatus 100 according to one embodiment will be described below with reference to FIG. 3. FIG. 3 is a diagram illustrating an example of the directional risk calculation process that is performed by the monitoring apparatus 100 according to one embodiment. FIG. 3(1) and FIG. 3(2) are diagrams for explaining calculation of the risk that is related to the traveling direction of the moving object. In FIG. 3(1), a risk value related to the traveling direction of the moving object is represented by one to four points.

Firstly, the directional risk calculation unit 123 identifies the traveling direction of the moving object from coordinates of two or more consecutive points of the moving object that are acquired by the acquisition unit 122. Further, as for the identified traveling direction of the moving object, when, for example, the traveling direction of the moving object is a direction away from the vehicle as indicate by 1 in FIG. 3(2), the directional risk calculation unit 123 calculates the risk value related to the traveling direction of the moving object as "1" as illustrated in FIG. 3(1).

Furthermore, for example, as indicated by 2 in FIG. 3(2), when the identified traveling direction of the moving object is a direction parallel to the vehicle, the directional risk calculation unit 123 calculates the risk value related to the traveling direction of the moving object as "2" as illustrated in FIG. 3(1). Moreover, for example, as indicated by 3 in FIG. 3(2), when the identified traveling direction of the moving object is a direction toward the vehicle, the directional risk calculation unit 123 calculates the risk value related to the traveling direction of the moving object as "3" as illustrated in FIG. 3(1).

Furthermore, for example, as indicated by 4 in FIG. 3(2), when the identified traveling direction of the moving object is a direction toward a door part of the vehicle, the directional risk calculation unit 123 calculates the risk value related to the traveling direction of the moving object as "4" as illustrated in FIG. 3(1).

Meanwhile, in FIG. 3(1) and FIG. 3(2), the example of calculation of the risk value related to the traveling direction of the moving object on the side of the vehicle is illustrated for the sake of explanation, but the moving object for which the directional risk calculation unit 123 performs the process of calculating the risk value related to the traveling direction of the moving object is not limited to the moving object that is present on the side of the vehicle, but includes a moving object that is present around the vehicle including a front-back direction. Further, the directional risk calculation unit 123 calculates the risk value related to the traveling direction of the moving object as described above at predetermined intervals. For example, the directional risk calculation unit 123 calculates the risk value related to the traveling direction of the moving object at intervals of 50 milliseconds.

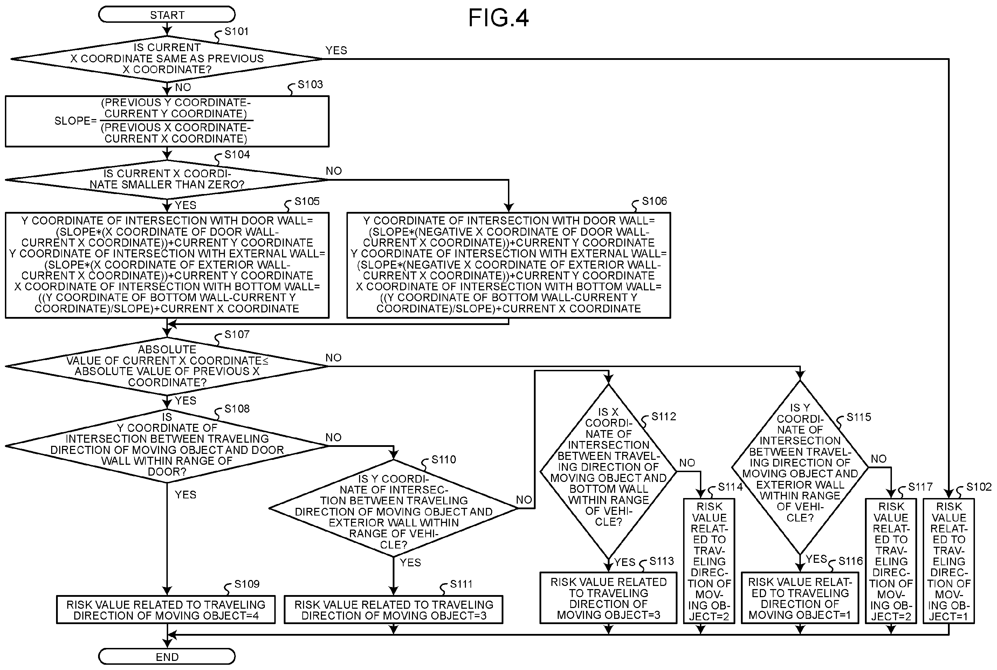

A specific process that is performed by the directional risk calculation unit 123 for calculating the risk value related to the traveling direction of the moving object will be described below with reference to FIG. 4. FIG. 4 is a flowchart illustrating an example of the flow of the process of calculating the risk value related to the traveling direction of the moving object by the monitoring apparatus 100 according to one embodiment. Firstly, the directional risk calculation unit 123 determines whether or not the X coordinate of the moving object that is acquired by the acquisition unit 122 is the same as an X coordinate of the moving object that is previously acquired (Step S101).

When the directional risk calculation unit 123 determines that the X coordinate is the same (Step S101: Yes), the directional risk calculation unit 123 calculates the risk value related to the traveling direction of the moving object as 1 (Step S102). Specifically, because the X coordinate is the same and moves parallel to the vehicle, the directional risk calculation unit 123 calculates a low value as the risk value related to the traveling direction of the moving object.

In contrast, when the directional risk calculation unit 123 determines that the X coordinate is not the same (Step S101: No), the directional risk calculation unit 123 calculates a slope (Step S103). For example, the directional risk calculation unit 123 calculates a slope by dividing a value that is obtained by subtracting the current Y coordinate of the moving object from the previous Y coordinate of the moving object by a value that is obtained by subtracting the current X coordinate of the moving object from the previous X coordinate of the moving object.

Subsequently, the directional risk calculation unit 123 determines whether or not the X coordinate of the moving object that is acquired by the acquisition unit 122 is smaller than zero (Step S104). Here, when the directional risk calculation unit 123 determines that the X coordinate is smaller than zero (Step S104: Yes), the directional risk calculation unit 123 calculates the X coordinate or the Y coordinate of an intersection between each of a door wall, an exterior wall, and a bottom wall and the moving object (Step S105).

Here, the door wall is a line that extends to the front of the vehicle and to the rear of the vehicle on the vehicle side, and is a line on which 4 points and 3 points are described in FIG. 3(1). The door wall is set on the outside of the vehicle in FIG. 3(1), but embodiments are not limited to this example. It may be possible to adopt a line that is set inside of the vehicle as long as the line is parallel to the vehicle side. Further, if a risk value is defined at each of points on the line inside of the vehicle, the risk value of the intersection with the traveling direction of the moving object is determined, and therefore, the line need not always be parallel. Furthermore, the exterior wall is a line that is located at a constant distance from the vehicle side and that is parallel to the door wall, and is a line on which 1 point is described in FIG. 3(1). Moreover, the bottom wall is a line that extends from the door wall to the exterior wall laterally to the vehicle on the rear of the vehicle, and is a line on which 2 points is described on the rear of the vehicle in FIG. 3(1). Meanwhile, a top wall (to be described later) is a line that extends from the door wall to the exterior wall laterally to the vehicle on the front of the vehicle, and is a line on which 2 points is described on the front of the vehicle in FIG. 3(1).

Explanation of Step S105 in FIG. 4 will be given below. For example, the directional risk calculation unit 123 calculates a Y coordinate of an intersection between the traveling direction of the moving object and the door wall by multiplying a value that is obtained by subtracting a value of the current X coordinate of the moving object from a value of the X coordinate of a position at which the door of the vehicle is present by the slope, and thereafter adding a value of the current Y coordinate of the moving object.

Further, for example, the directional risk calculation unit 123 calculates a Y coordinate of an intersection between the traveling direction of the moving object and the exterior wall by multiplying a value that is obtained by subtracting the value of the current X coordinate of the moving object from a value of the X coordinate of the exterior wall of the vehicle by the slope, and thereafter adding the value of the current Y coordinate of the moving object. Furthermore, for example, the directional risk calculation unit 123 calculates an X coordinate of the intersection between the traveling direction of the moving object and the bottom wall by multiplying a value that is obtained by subtracting the value of the current Y coordinate of the moving object from a value of the Y coordinate of the bottom wall by the slope, and thereafter adding the value of the current X coordinate of the moving object.

In contrast, when the directional risk calculation unit 123 determines that the X coordinate is not smaller than zero (Step S104: No), the directional risk calculation unit 123 similarly calculates the X coordinate or the Y coordinate of the intersection between each of the door wall, the exterior wall, and the bottom wall and the moving object (Step S106). For example, the directional risk calculation unit 123 calculates the Y coordinate of the intersection between the traveling direction of the moving object and the door wall by multiplying a value that is obtained by subtracting the value of the current X coordinate of the moving object from a negative value of the X coordinate of the position at which the door of the vehicle is present by the slope, and thereafter adding the value of the current Y coordinate of the moving object.

Further, for example, the directional risk calculation unit 123 calculates the Y coordinate of the intersection between the traveling direction of the moving object and the exterior wall by multiplying a value that is obtained by subtracting the value of the current X coordinate of the moving object from a negative value of the X coordinate of the exterior wall of the vehicle by the slope, and thereafter adding the value of the current Y coordinate of the moving object. Furthermore, for example, the directional risk calculation unit 123 calculates the X coordinate of the intersection between the traveling direction of the moving object and the bottom wall by multiplying a value that is obtained by subtracting the value of the current Y coordinate of the moving object from the value of the Y coordinate of the bottom wall by the slope, and thereafter adding the value of the current X coordinate of the moving object.

Subsequently, the directional risk calculation unit 123 determines whether or not an absolute value of the current X coordinate of the moving object is equal to or smaller than an absolute value of the previous X coordinate of the moving object (Step S107). In other words, the directional risk calculation unit 123 determines whether or not the moving object is moving in the vehicle direction. Here, when the directional risk calculation unit 123 determines that the absolute value of the current X coordinate is equal to or smaller than the absolute value of the previous X coordinate of the moving object (Step S107: Yes), the directional risk calculation unit 123 subsequently determines whether or not the Y coordinate of the intersection between the traveling direction of the moving object and the door wall of the vehicle is within a range of the door (Step S108). For example, the directional risk calculation unit 123 determines whether or not the Y coordinate of the intersection between the traveling direction of the moving object and the door wall of the vehicle is within a Y-coordinate range in which the door of the vehicle is present.

Here, when the directional risk calculation unit 123 determines that the Y coordinate of the intersection is within the range of the door (Step S108: Yes), the directional risk calculation unit 123 calculates the risk value related to the traveling direction of the moving object as 4 (Step S109). In other words, because the moving object is travelling toward the door of the vehicle, a highest value is calculated as the risk value related to the traveling direction of the moving object.

In contrast, when the directional risk calculation unit 123 determines that the Y coordinate of the intersection is not within the range of the door (Step S108: No), the directional risk calculation unit 123 subsequently determines whether or not the Y coordinate of the intersection between the traveling direction of the moving object and the exterior wall of the vehicle is within a range of the vehicle (Step S110). For example, the directional risk calculation unit 123 determines whether or not the Y coordinate of the intersection between the traveling direction of the moving object and the exterior wall of the vehicle is within a Y-coordinate range in which the vehicle is present.

Here, when the directional risk calculation unit 123 determines that the Y coordinate of the intersection is within the range of the vehicle (Step S110: Yes), the directional risk calculation unit 123 calculates the risk value related to the traveling direction of the moving object as 3 (Step S111). In other words, because the moving object is travelling toward the exterior wall of the vehicle, a high value is calculated as the risk value related to the traveling direction of the moving object.

In contrast, when the directional risk calculation unit 123 determines that the Y coordinate of the intersection is not within the range of the vehicle (Step S110: No), the directional risk calculation unit 123 subsequently determines whether or not the X coordinate of the intersection between the traveling direction of the moving object and the bottom wall of the vehicle is within a range of the vehicle (Step S112). For example, the directional risk calculation unit 123 determines whether or not the X coordinate of the intersection between the traveling direction of the moving object and the bottom wall of the vehicle is within an X-coordinate range in which the vehicle is present.

Here, when the directional risk calculation unit 123 determines that the X coordinate of the intersection is within a range of the bottom wall of the vehicle (Step S112: Yes), the directional risk calculation unit 123 calculates the risk value related to the traveling direction of the moving object as 3 (Step S113). In other words, because the moving object is travelling toward the bottom wall of the vehicle, a high value is calculated as the risk related to the traveling direction of the moving object.

In contrast, when the directional risk calculation unit 123 determines that the X coordinate of the intersection is not within the range of the bottom wall of the vehicle (Step S112: No), the directional risk calculation unit 123 calculates the risk related to the traveling direction of the moving object as 2 (Step S114). In other words, because the moving object is not travelling toward the bottom wall of the vehicle, a low value is calculated as the risk related to the traveling direction of the moving object.

Referring back to Step S107, when the directional risk calculation unit 123 determines that the absolute value of the current X coordinate is not equal to or smaller than the absolute value of the previous X coordinate of the moving object (Step S107: No), the directional risk calculation unit 123 subsequently determines whether or not the Y coordinate of the intersection between the traveling direction of the moving object and the exterior wall of the vehicle is within a range of the vehicle (Step S115). For example, the directional risk calculation unit 123 determines whether or not the Y coordinate of the intersection between the traveling direction of the moving object and the exterior wall of the vehicle is within a Y-coordinate range in which the exterior wall of the vehicle is present.

Here, when the directional risk calculation unit 123 determines that the Y coordinate of the intersection is within the range of the exterior wall of the vehicle (Step S115: Yes), the directional risk calculation unit 123 calculates the risk value related to the traveling direction of the moving object as 1 (Step S116). In other words, because the moving object is travelling in an opposite direction of the vehicle, a lowest value is calculated as the risk related to the traveling direction of the moving object.

In contrast, when the directional risk calculation unit 123 determines that the Y coordinate of the intersection is not within the range of the exterior wall of the vehicle (Step S115: No), the directional risk calculation unit 123 calculates the risk related to the traveling direction of the moving object as 2 (Step S117). In other words, because the moving object is traveling in the direction away from the vehicle, a low value is calculated as the risk related to the traveling direction of the moving object. The directional risk calculation unit 123 calculates the risk related to the traveling direction of the moving object by performing the process as described above.

### 4. Positional risk calculation process

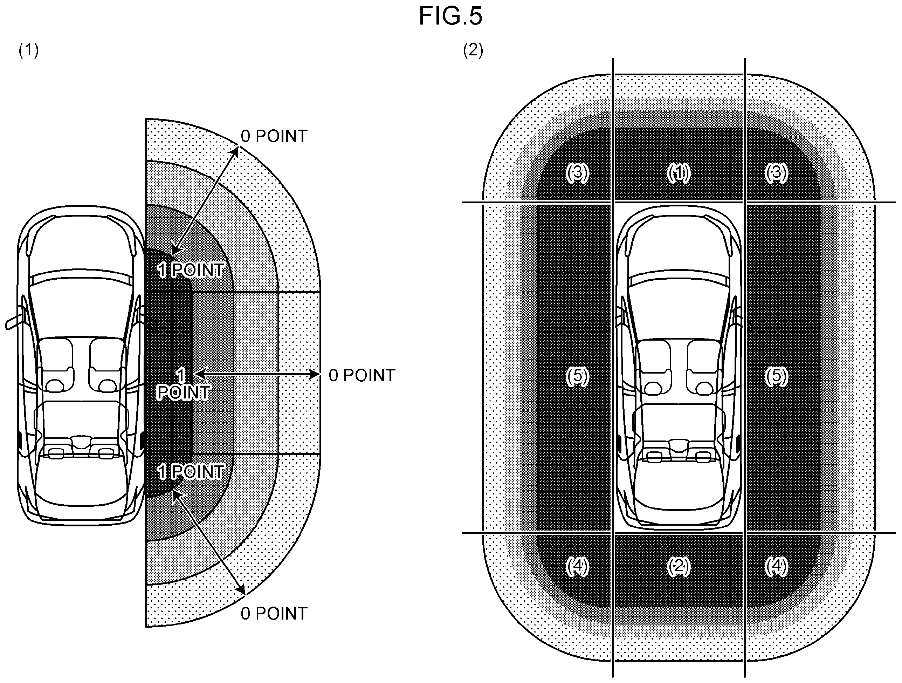

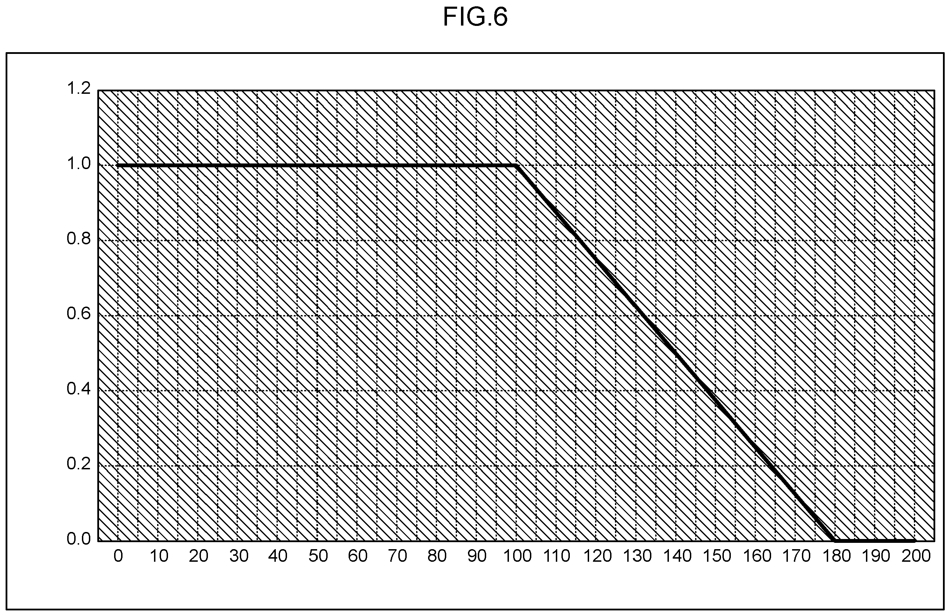

An example of the positional risk calculation process that is performed by the monitoring apparatus 100 according to one embodiment will be described below with reference to FIG. 5 and FIG. 6. FIG. 5 and FIG. 6 are diagrams illustrating an example of the positional risk calculation process that is performed by the monitoring apparatus 100 according to one embodiment. FIG. 5(1) and FIG. 5(2) are diagrams for explaining calculation of the risk related to the position of the moving object. In FIG. 5(1), a risk value is represented by zero to one point in accordance with a distance between the vehicle and the moving object.

In other words, the positional risk calculation unit 124 calculates the risk value related to the position of the moving object in accordance with the distance between the vehicle and the moving object. Here, a method of calculating a distance between the vehicle and the motion sensor differs depending on a position at which the moving object is present. For example, as indicated by 1 in FIG. 5(2), when the moving object is located on an upper side relative to the top wall of the vehicle, the positional risk calculation unit 124 calculate a distance from the top wall to the moving object as the distance between the vehicle and the moving object.

Further, for example, as indicated by 2 in FIG. 5(2), when the moving object is located on a lower side relative to the bottom wall of the vehicle, the positional risk calculation unit 124 calculates a distance from the bottom wall to the moving object as the distance between the vehicle and the moving object. Furthermore, for example, as indicated by 3 in FIG. 5(2), when the moving object is located on an upper side of the top wall of the vehicle and an outer side of the door wall, the positional risk calculation unit 124 calculates a distance from an intersection between the top wall and the door wall to the moving object as the distance between the vehicle and the moving object.

Moreover, for example, as indicated by 4 in FIG. 5(2), when the moving object is located on a lower side of the bottom wall of the vehicle and an outer side of the door wall, the positional risk calculation unit 124 calculates a distance from an intersection between the bottom wall and the door wall to the moving object as the distance between the vehicle and the moving object. Furthermore, for example, as indicated by 5 in FIG. 5(2), when the moving object is located between the top wall and the bottom wall of the vehicle and on an outer side of the door wall, the positional risk calculation unit 124 calculates a distance from the door wall to the moving object as the distance between the vehicle and the moving object.

Here, the positional risk calculation unit 124 is able to calculate the risk value related to the position of the moving object such that a risk related to the position of the moving object linearly decreases with increase in the distance between the motion sensor and the moving object in a predetermined distance range between the motion sensor and the moving object. For example, as illustrated in FIG. 6, the positional risk calculation unit 124 calculates the risk value related to the position of the moving object as 1 when the distance between the motion sensor and the moving object is in a range from 0 cm to 100 cm, and calculates the risk value related to the position of the moving object such that the risk value related to the position of the moving object linearly decreases from 1 to 0 with increase in the distance between the motion sensor and the moving object when the distance between the motion sensor and the moving object is in a range from 100 cm to 180 cm.

Meanwhile, the positional risk calculation unit 124 calculates the risk value related to the position of the moving object as described above at predetermined intervals. For example, the positional risk calculation unit 124 calculates the risk value related to the position of the moving object at intervals of 50 milliseconds.

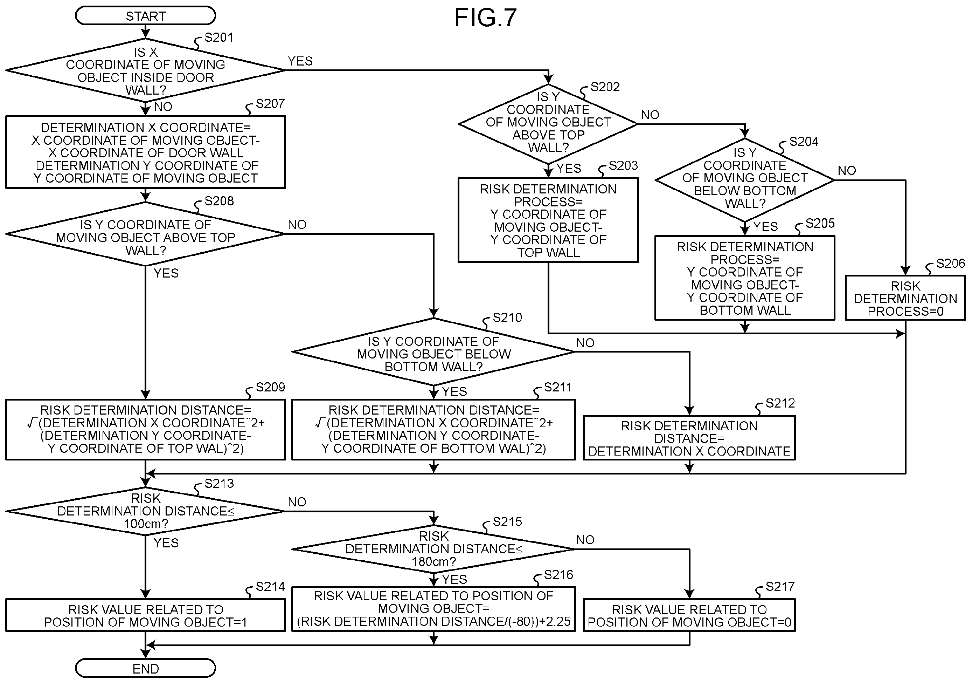

A specific process of calculating the risk value related to the position of the moving object by the positional risk calculation unit 124 will be described below with reference to FIG. 7. FIG. 7 is a flowchart illustrating an example of the flow of the process of calculating the risk value related to the position of the moving object according to one embodiment. Firstly, the positional risk calculation unit 124 determines whether or not the X coordinate of the moving object that is acquired by the acquisition unit 122 is inside the door wall (Step S201). For example, the positional risk calculation unit 124 determines whether or not a value of the X coordinate of the moving object that is acquired by the acquisition unit 122 is within a range of an inner side of the left and right doors of the vehicle (for example, -90 ≤ X coordinate ≤ 90).

Here, when the positional risk calculation unit 124 determines that the X coordinate of the moving object is inside the door wall of the vehicle (Step S201: Yes), the positional risk calculation unit 124 subsequently determines whether or not the Y coordinate of the moving object that is acquired by the acquisition unit 122 is above the top wall of the vehicle (Step S202). For example, the positional risk calculation unit 124 determines whether or not a value of the Y coordinate of the moving object that is acquired by the acquisition unit 122 is larger than a value of the Y coordinate of the top wall of the vehicle (for example, Y coordinate > 360).

Here, when the positional risk calculation unit 124 determines that the Y coordinate is above the top wall of the vehicle (Step S202: Yes), the positional risk calculation unit 124 calculates a value that is obtained by subtracting the value of the Y coordinate of the top wall of the vehicle from the value of the Y coordinate of the moving object as a risk determination distance (Step S203).

In contrast, when the positional risk calculation unit 124 determines that the Y coordinate is not above the top wall of the vehicle (Step S202: No), the positional risk calculation unit 124 subsequently determines whether or not the Y coordinate of the moving object that is acquired by the acquisition unit 122 is below the bottom wall of the vehicle (Step S204). For example, the positional risk calculation unit 124 determines whether or not the value of the Y coordinate of the moving object that is acquired by the acquisition unit 122 is smaller than a value of the Y coordinate of the bottom wall of the vehicle (for example, Y coordinate < -90).

Here, when the positional risk calculation unit 124 determines that the Y coordinate is below the bottom wall of the vehicle (Step S204: Yes), the positional risk calculation unit 124 calculates a value that is obtained by subtracting the value of the Y coordinate of the bottom wall from the value of the Y coordinate of the moving object as the risk determination distance (Step S205).

In contrast, when the positional risk calculation unit 124 determines that the Y coordinate is not below the bottom wall of the vehicle (Step S204: No), the positional risk calculation unit 124 determines that the risk determination distance is zero (Step S206). In other words, the coordinate indicates that the moving object is located inside the vehicle, and therefore, the moving object is excluded from a risk determination target.

Referring back to Step S201, when the positional risk calculation unit 124 determines that the X coordinate of the moving object is not inside the door wall (Step S201: No), the positional risk calculation unit 124 subsequently calculates a coordinate that is used for the determination (Step S207). For example, the positional risk calculation unit 124 calculates a value that is obtained by subtracting the value of the X coordinate of the door wall from the value of the X coordinate of the moving object as a determination X coordinate. Further, for example, the positional risk calculation unit 124 calculates the value of the Y coordinate of the moving object as a determination Y coordinate.

Subsequently, the positional risk calculation unit 124 determines whether or not the Y coordinate of the moving object that is acquired by the acquisition unit 122 is above the top wall (Step S208). For example, the positional risk calculation unit 124 determines whether or not the value of the Y coordinate of the moving object that is acquired by the acquisition unit 122 is larger than the value of the Y coordinate of the top wall of the vehicle (for example, Y coordinate > 360).

Here, when the positional risk calculation unit 124 determines that the Y coordinate is above the top wall of the vehicle (Step S208: Yes), the positional risk calculation unit 124 calculates, as the risk determination distance, a square root of a value that is obtained by adding a square of a difference between a value of an estimated Y coordinate and the value of the Y coordinate of the top wall to a square of the value of the determination X coordinate (Step S209).

In contrast, when the positional risk calculation unit 124 determines that the Y coordinate is not above the top wall of the vehicle (Step S208: No), the positional risk calculation unit 124 subsequently determines whether or not the Y coordinate of the moving object that is acquired by the acquisition unit 122 is below the bottom wall of the vehicle (Step S210). For example, the positional risk calculation unit 124 determines whether or not the value of the Y coordinate of the moving object that is acquired by the acquisition unit 122 is smaller than the value of the Y coordinate of the bottom wall of the vehicle (for example, Y coordinate < -90).

Here, when the positional risk calculation unit 124 determines that the Y coordinate is below the bottom wall of the vehicle (Step S210: Yes), the positional risk calculation unit 124 calculates, as the risk determination distance, a square root of a value that is obtained by adding a square of a difference between the value of the estimated Y coordinate and the value of the bottom wall to a square of the value of the determination X coordinate (Step S211).

In contrast, when the positional risk calculation unit 124 determines that the Y coordinate is not below the bottom wall of the vehicle (Step S210: No), the positional risk calculation unit 124 calculates the determination X coordinate as the risk determination distance (Step S212).

Thereafter, the positional risk calculation unit 124 performs determination on the calculated determination distances. Processes below are performed continuously from the processes at Step S203, Step S205, Step S206, Step S209, Step S211, and Step S212. Firstly, the positional risk calculation unit 124 determines whether or not the risk determination distance is equal to or smaller than 100 cm (Step S213). Here, when the positional risk calculation unit 124 determines that the risk determination distance is equal to or smaller than 100 cm (Step S213: Yes), the positional risk calculation unit 124 calculates the risk related to the position of the moving object as 1 (Step S214).

In contrast, when the positional risk calculation unit 124 determines that the risk determination distance is not equal to or smaller than 100 cm (Step S213: No), the positional risk calculation unit 124 subsequently determines that the risk determination distance is equal to or smaller than 180 cm (Step S215). Here, when the positional risk calculation unit 124 determines that the risk determination distance is equal to or smaller than 180 cm (Step S215: Yes), the positional risk calculation unit 124 calculates a value that is obtained by adding 2.25 to a value that is obtained by dividing the risk determination distance by -80, as the risk value related to the position of the moving object (Step S216). In other words, when the risk determination distance is within the range from 100 cm to 180 cm, the risk value related to the position of the moving object linearly decreases from 1 to 0.

In contrast, when the positional risk calculation unit 124 determines that the risk determination distance is not equal to or smaller than 180 cm (Step S215: No), the positional risk calculation unit 124 determines that the risk related to the position of the moving object is zero (Step S217). The positional risk calculation unit 124 calculates the risk related to the position of the moving object by performing the process as described above.

### 5. Determination process

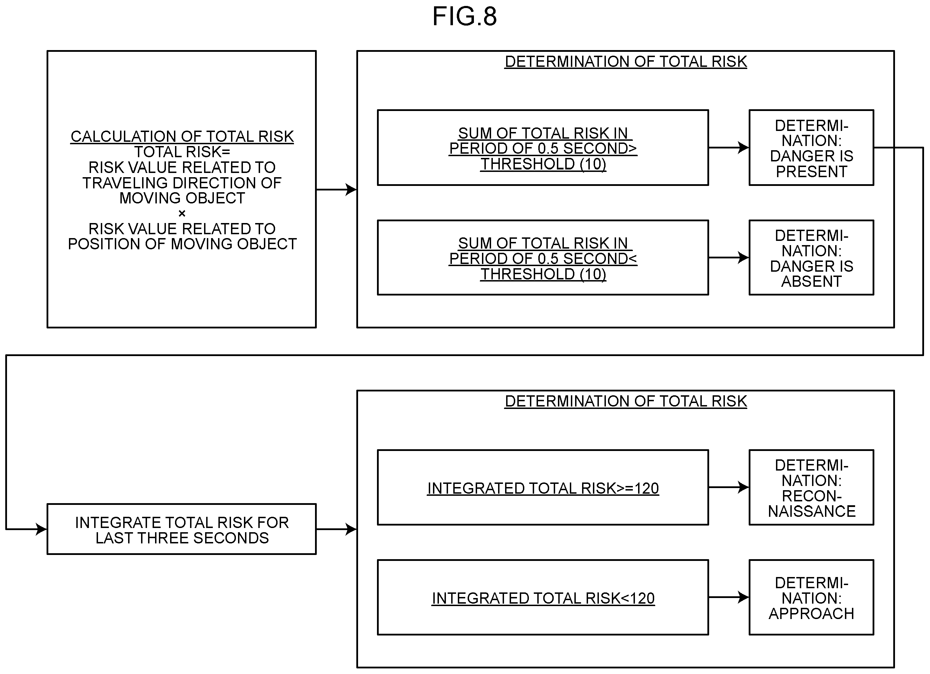

An example of the determination process that is performed by the monitoring apparatus 100 according to one embodiment will be described below with reference to FIG. 8. FIG. 8 is a diagram illustrating an example of the determination process that is performed by the monitoring apparatus 100 according to one embodiment. The determination unit 125 performs the determination process through the flow illustrated in FIG. 8. Firstly, the determination unit 125 calculates an integrated value of a value that is obtained by multiplying the risk value that is related to the traveling direction of the moving object and that is calculated by the directional risk calculation unit 123 at intervals of 50 milliseconds and the risk value that is related to the position of the moving object and that is calculated by the positional risk calculation unit 124 at intervals of 50 milliseconds, in a period of 0.5 second.

Subsequently, the determination unit 125 determines whether or not the integrated value of the value that is obtained by multiplying the risk that is related to the traveling direction of the moving object and that is calculated by the directional risk calculation unit 123 at intervals of 50 milliseconds and the risk that is related to the position of the moving object and that is calculated by the positional risk calculation unit 124 at intervals of 50 milliseconds, in a period of 0.5 second, exceeds the predetermined threshold of "10", determines that there is no risk when the integrated value does not exceed the predetermined threshold, and determines that there is risk (approach or reconnaissance) when the integrated value exceeds the predetermined threshold.

Subsequently, the determination unit 125 calculates an integrated value of a value that is obtained by multiplying the risk value related to the traveling direction of the moving object and the risk value related to the position of the moving object, for the last three seconds. Subsequently, the determination unit 125 determines whether or not the integrated value of the value that is obtained by multiplying the risk that is related to the traveling direction of the moving object and that is calculated by the directional risk calculation unit 123 at intervals of 50 milliseconds and the risk that is related to the position of the moving object and that is calculated by the positional risk calculation unit 124 at intervals of 50 milliseconds, for the last three seconds, is equal to or larger than a predetermined threshold of "120", determines that the behavior of the moving object is approach when the integrated value does not exceed the predetermined threshold, and determines that the behavior of the moving object is reconnaissance when the integrated value exceeds the predetermined threshold.

### 6. Flowchart

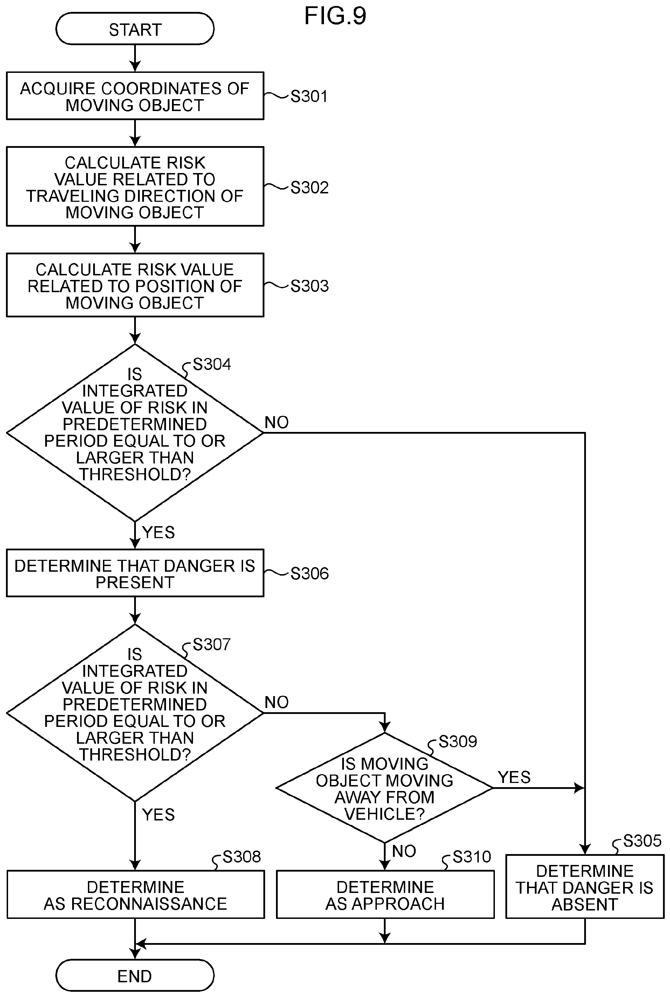

A process that is performed by the monitoring apparatus 100 configured as described above will be described below with reference to the flowchart in FIG. 9. FIG. 9 is a flowchart illustrating an example of the flow of the process that is performed by the monitoring apparatus 100 according to one embodiment. The flowchart in FIG. 9 is mainly executed by the control unit 120. Further, the flowchart may be implemented as a monitoring program by configuring the program so as to be executed by the CPU that is included in the control unit 120. Meanwhile, Steps described below may be performed in different order, and some of processes may be omitted.

Firstly, the acquisition unit 122 acquires coordinates of a moving object that are identified based on information that is detected by the motion sensor that is installed in the vehicle (Step S301). For example, the acquisition unit 122 analyzes a signal that is received by the motion sensor that is installed in the vehicle, and acquires the coordinates of the moving object that are identified from information on a distance and an angle.

Subsequently, the directional risk calculation unit 123 calculates the risk value related to the traveling direction of the moving object based on the coordinates of the moving object that are acquired by the acquisition unit 122 (Step S302). For example, the directional risk calculation unit 123 calculates the risk value related to the traveling direction of the moving object by performing the processes from Step S101 to Step S117 as described above.

Then, the positional risk calculation unit 124 calculates the risk value related to the position of the moving object based on the coordinates of the moving object that are acquired by the acquisition unit 122 (Step S303). For example, the positional risk calculation unit 124 calculates the risk value related to the position of the moving object by performing the processes from Step S201 to Step S217 as described above.

Subsequently, the determination unit 125 determines whether or not an integrated value of the risk value related to the traveling direction of the moving object and the risk value related to the position of the moving object in a predetermined period is equal to or larger than a threshold (Step S304). For example, the determination unit 125 determines whether or not an integrated value of a value that is obtained by multiplying the risk value related to the traveling direction of the moving object and the risk value related to the position of the moving object in a period of 0.5 second is larger than 10.

Here, when the determination unit 125 determines that the integrated value is smaller than the threshold (Step S304: No), the determination unit 125 determines that danger is absent (Step S305). In contrast, when the determination unit 125 determines that the integrated value is larger than the threshold (Step S304: Yes), the determination unit 125 determines that danger is present (Step S306).

Subsequently, the determination unit 125 determines whether or not the integrated value of the risk value related to the traveling direction of the moving object and the risk value related to the position of the moving object in a predetermined period is equal to or larger than a threshold (Step S307). For example, the determination unit 125 determines whether or not an integrated value of a value that is obtained by multiplying the risk value related to the traveling direction of the moving object and the risk value related to the position of the moving object in a period of 1.5 seconds is larger than 60.

Here, when the determination unit 125 determines that the integrated value is larger than the threshold (Step S307: Yes), the determination unit 125 determines that the behavior of the moving object is reconnaissance (Step S308). In contrast, when the determination unit 125 determines that the integrated value is not larger than the threshold (Step S307: No), the determination unit 125 subsequently determines whether or not the coordinates of the moving object that are acquired by the acquisition unit 122 move in a direction away from the vehicle (Step S309). For example, the determination unit 125 identifies the traveling direction of the moving object from coordinates of two or more consecutive points of the moving object, and determines whether or not the traveling direction of the moving object is the direction away from the vehicle.

Here, when the determination unit 125 determines that the coordinates of the moving object move in the direction away from the vehicle (Step S309: Yes), the determination unit 125 determines that danger is absent (Step S305). In contrast, when the determination unit 125 determines that the coordinates of the moving object do not move in the direction away from the vehicle (Step S309: No), the determination unit 125 determines that the behavior of the moving object is approach (Step S310).

### 7. Effects

The monitoring apparatus 100 according to one embodiment includes an acquisition unit that acquires coordinates of a moving object that are identified based on information that is detected by a motion sensor that is installed in a vehicle, the directional risk calculation unit 123 that calculates a risk value related to a traveling direction of the moving object based on the coordinates of the moving object that are acquired by the acquisition unit 122, and the determination unit 125 that determines presence or absence of danger in accordance with the risk value that is related to the traveling direction of the moving object and that is calculated by the directional risk calculation unit 123.

With this configuration, the monitoring apparatus 100 is able to determine presence or absence of danger in accordance with the risk value that is related to the traveling direction of the moving object and that is calculated based on the coordinates of the moving object, and determine presence or absence of danger to the vehicle with high accuracy. In other words, with use of the traveling direction of the moving object with respect to a position of the vehicle for the determination, the monitoring apparatus 100 is able to prevent erroneous detection when determining presence or absence of danger based on only a distance between the moving object and the vehicle.

The monitoring apparatus 100 according to one embodiment further includes the positional risk calculation unit 124 that calculates a risk value related to a position of the moving object based on the coordinates of the moving object that are acquired by the acquisition unit 122, and the determination unit 125 determines presence or absence of the danger in accordance with the risk value that is related to the traveling direction of the moving object and that is calculated by the directional risk calculation unit 123 and the risk value that is related to the position of the moving object and that is calculated by the positional risk calculation unit 124.

With this configuration, the monitoring apparatus 100 is able to determine presence or absence of danger in accordance with the risk value related to the traveling direction of the moving object and the risk value related to the position of the moving object, which are calculated based on the coordinates of the moving object, and determine presence or absence of danger to the vehicle with high accuracy.

The determination unit 125 of the monitoring apparatus 100 according to one embodiment, when determining that the danger is present, determines a behavior of the moving object in accordance with the risk value that is related to the traveling direction of the moving object and that is calculated by the directional risk calculation unit 123 and the risk value that is related to the position of the moving object and that is calculated by the positional risk calculation unit 124.

With this configuration, the monitoring apparatus 100, when determining that the danger is present, is able to determine the behavior of the moving object in accordance with the risk value related to the traveling direction of the moving object and the risk value related to the position of the moving object, which are calculated based on the coordinates of the moving object, and determine a dangerous behavior toward the vehicle with high accuracy.

The positional risk calculation unit 124 of the monitoring apparatus 100 according to one embodiment calculates the risk value related to the position of the moving object such that a risk related to the position of the moving object linearly decreases with increase in a distance between the motion sensor and the moving object in a predetermined distance range between the motion sensor and the moving object. With this configuration, when the distance between the motion sensor and the moving object falls within the predetermined range, the monitoring apparatus 100 calculates the risk value related to the position of the moving object such that the risk related to the position of the moving object linearly decreases with increase in the distance between the motion sensor and the moving object, and uses the risk value for the determination, so that it is possible to determine presence or absence of danger to the vehicle with high accuracy.

The determination unit 125 of the monitoring apparatus 100 according to one embodiment, when determining that the danger is present, determines that the behavior of the moving object is approach when an integrated value of the risk value that is related to the traveling direction of the moving object and that is calculated by the directional risk calculation unit 123 and the risk value that is related to the position of the moving object and that is calculated by the positional risk calculation unit 124 is equal to or larger than a first threshold and smaller than a second threshold, and determines that the behavior of the moving object is reconnaissance when the integrated value exceeds the second threshold.

With this configuration, the monitoring apparatus 100, when determining that the danger is present, performs threshold determination with respect to a value of the integrated value of the risk value related to the traveling direction of the moving object and the risk value related to the position of the moving object, which are calculated based on the coordinates of the moving object, so that it is possible to determine presence or absence of danger to the vehicle with high accuracy.

The determination unit 125 of the monitoring apparatus 100 according to one embodiment changes the first threshold and the second threshold in accordance with a place where the vehicle including the motion sensor is located. With this configuration, by changing the threshold in accordance with the place where the vehicle is located, the monitoring apparatus 100 is able to increase accuracy of the threshold determination and determine presence or absence of danger to the vehicle with high accuracy.

The determination unit 125 of the monitoring apparatus 100 according to one embodiment changes the first threshold and the second threshold in accordance with time. With this configuration, by changing the threshold in accordance with time, the monitoring apparatus 100 is able to increase accuracy of the threshold determination and determine presence or absence of danger to the vehicle with high accuracy.

The monitoring apparatus 100 according to one embodiment further includes the output unit 126 that performs predetermined output in accordance with the behavior of the moving object that is determined by the determination unit 125. With this configuration, the monitoring apparatus 100 is able to provide output, such as a notice or an alarm, in response to the determined behavior of the moving object, and prevent danger to the vehicle.

### Second embodiment

In the first embodiment, the example has been mainly described in which presence or absence of danger to a vehicle is determined in accordance with the risk value related to the traveling direction of the moving object and the risk value related to the position of the moving object; however, in a second embodiment to be described below, an example will be described in which setting of the risk value related to the traveling direction of the moving object and the risk value related to the position of the moving object are changed. Meanwhile, the same explanation as the first embodiment will be omitted appropriately.

### 1. Overview

An overview of the monitoring apparatus 100 according to the second embodiment will be described below. The monitoring apparatus 100 is an apparatus that changes setting of the risk value related to the traveling direction of the moving object. It is preferable to change the setting of the risk value related to the traveling direction of the moving object described in the first embodiment, in accordance with information on a size of the vehicle, such as a body type or a vehicle model.

This is because, for example, in a vehicle with a large (small) size, a size of each part of the vehicle, such as a length from the top wall to the bottom wall of the vehicle, sizes of the doors, or positions of the doors, is different from a general vehicle, and therefore, if the setting of the risk value related to the traveling direction of the moving object with respect to the general vehicle is applied to all kinds of vehicles, in some cases, erroneous detection may occur.

To cope with this, the monitoring apparatus 100 acquires information on the size of the vehicle, and changes the setting of the risk value that is related to the traveling direction of the moving object and that is detected by the motion sensor, in accordance with the acquired information. With this configuration, the monitoring apparatus 100 is able to accurately determine presence or absence of danger to the vehicle.

### 2. Configuration of monitoring apparatus

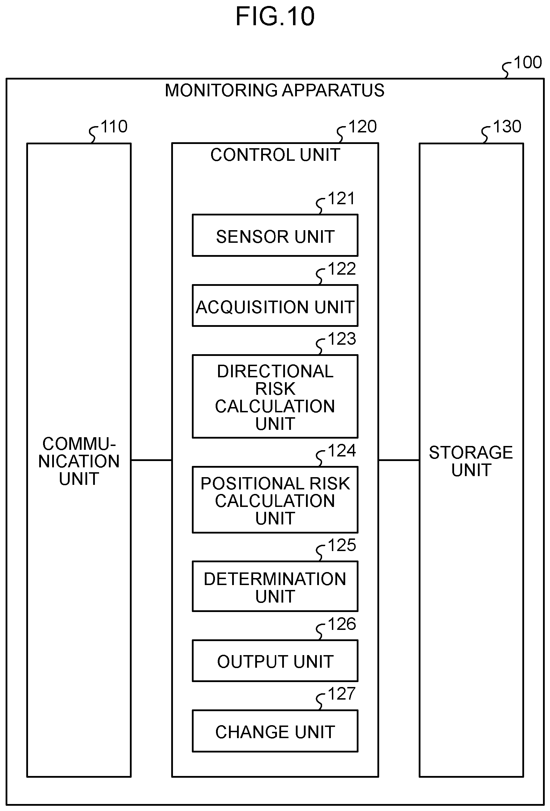

The monitoring apparatus 100 according to one embodiment will be described below with reference to FIG. 10. FIG. 10 is a diagram illustrating a configuration example of the monitoring apparatus 100 according to one embodiment. As illustrated in FIG. 10, the control unit 120 of the monitoring apparatus 100 includes the sensor unit 121, the acquisition unit 122, the directional risk calculation unit 123, the positional risk calculation unit 124, the determination unit 125, the output unit 126, and a change unit 127. Each of the units included in the control unit 120 will be described below.

The acquisition unit 122 acquires the information on the size of the vehicle. For example, the acquisition unit 122 acquires information on a body type. More specifically, the acquisition unit 122 acquires information on a body type of "sedan". As another example, the acquisition unit 122 acquires information on a vehicle model. For example, the acquisition unit 122 acquires, as the information on the vehicle model, a model number of "*****". Meanwhile, the model number is described above as one example of the information on the vehicle model, but the information is not specifically limited as long as it is possible to identify the size of the vehicle by the information.

As another example, the acquisition unit 122 acquires information on the mounting position of the motion sensor, in addition to the information on the size of the vehicle. For example, the acquisition unit 122 acquires the information on the mounting position of the motion sensor by receiving input from a user. For example, the acquisition unit 122 acquires the information on the mounting position of the motion sensor by receiving input from an external apparatus.

The change unit 127 changes the setting of the risk value that is related to the traveling direction of the moving object and that is detected by the motion sensor, in accordance with the information that is acquired by the acquisition unit 122. For example, the change unit 127 changes the setting of the risk value that is related to the traveling direction of the moving object and that is detected by the motion sensor, in accordance with the information on the size of the vehicle that is acquired by the acquisition unit 122. Further, for example, the change unit 127 changes the setting of the risk value that is related to the traveling direction of the moving object and that is detected by the motion sensor, in accordance with the information on the mounting position of the motion sensor that is acquired by the acquisition unit 122.

The change unit 127 changes the setting of the risk value related to the traveling direction of the moving object and the setting of the risk value related to the position of the moving object, in accordance with the information that is acquired by the acquisition unit 122. For example, the change unit 127 changes the setting of the risk value related to the traveling direction of the moving object and the setting of the risk value related to the position of the moving object, in accordance with the information on the size of the vehicle that is acquired by the acquisition unit 122. Further, for example, the change unit 127 changes the setting of the risk value that is related to the traveling direction of the moving object and that is detected by the motion sensor and the setting of the risk value related to the position of the moving object, in accordance with the information on the mounting position of the motion sensor that is acquired by the acquisition unit 122.

### 3. Change process

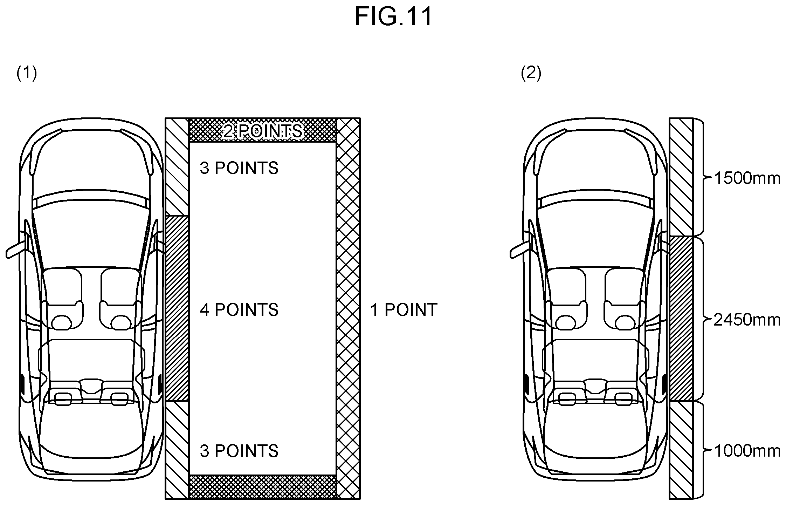

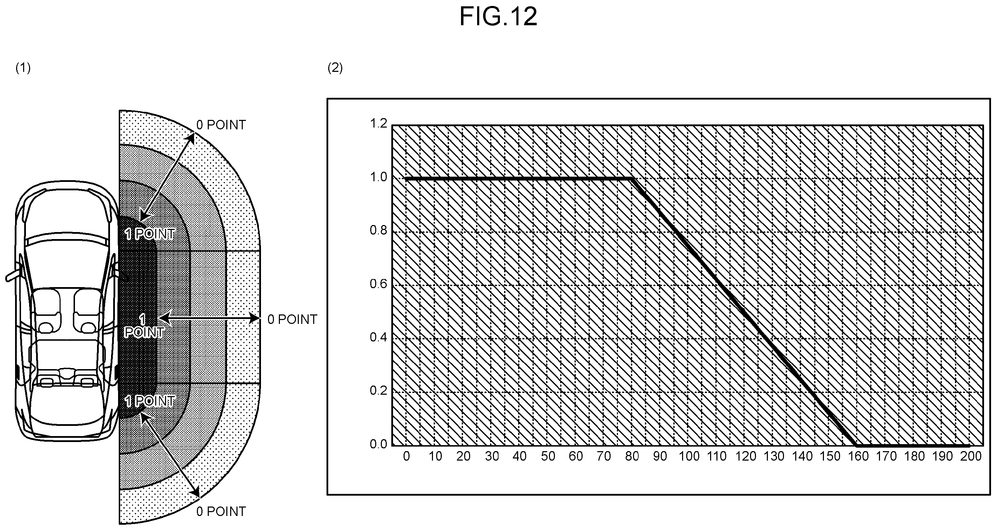

A change process that is performed by the monitoring apparatus 100 according to one embodiment will be described below with reference to FIG. 11 and FIG. 12. FIG. 11 and FIG. 12 are diagrams illustrating an example of the change process that is performed by the monitoring apparatus 100 according to one embodiment. Firstly, an example for changing the setting of the risk value related to the traveling direction of the moving object will be described. FIG. 11(1) and FIG. 11(2) are bird's eye views for explaining a change of the setting of the risk value related to the traveling direction of the moving object.

Dimensions of a vehicle body (for example, an overall length of the vehicle body, positions of doors, or the like) differ depending on the body type or the vehicle model. Therefore, the change unit 127 changes the setting of the risk value that is related to the traveling direction of the moving object and that is detected by the motion sensor, in accordance with the information on the size of the vehicle that is acquired by the acquisition unit 122. Specifically, the setting of the risk value related to the traveling direction of the moving object is made in accordance with the dimensions of the vehicle body, and therefore, the change unit 127 identifies the overall length of the vehicle body, the positions of the doors, or the like from the acquired information on the size of the vehicle, and changes the setting of the risk value related to the traveling direction of the moving object in accordance with the identified overall length of the vehicle, the identified positions of the doors, or the like.

In the example below, a case will be described in which, before the change unit 127 changes the setting of the risk value related to the traveling direction of the moving object (FIG. 11(1)), the setting of the risk value related to the traveling direction of the moving object is made such that a length from the top wall to the door of the vehicle on the vehicle side, which correspond to the traveling direction of the moving object and for which the risk value related to the traveling direction of the moving object is calculated as three points, is 1400 millimeters (mm), a range in which the door is present on the vehicle side, for which the risk value related to the traveling direction of the moving object is calculated as four points, is from 1400 mm to 3800 mm from the top wall, and a length from the bottom wall to the door, for which the risk value related to the traveling direction of the moving object is calculated as three points, is 900 mm. Meanwhile, only the example will be described in which the range in which the risk value related to the traveling direction of the moving object is calculated as three points and the range in which the risk value related to the traveling direction of the moving object is calculated as four points are changed, but the process performed by the change unit 127 is not limited to this example.

When the body type of "sedan" is acquired as the information on the vehicle body, the change unit 127 firstly identifies dimensions of a general vehicle body with the body type of "sedan" (an overall length is "4950 mm", a length from the top wall to the door is "1500 mm", a length from the bottom wall to the door is "1000 mm", or the like). Subsequently, as illustrated in FIG. 11(2), the change unit 127 changes the length from the top wall to the door of the vehicle on the vehicle side, which corresponds to the traveling direction of the moving object and for which the risk value related to the traveling direction of the moving object is calculated as three points, to 1500 mm.

Further, as illustrated in FIG. 11(2), the change unit 127 changes a range in which the door is present on the vehicle side, which corresponds to the traveling direction of the moving object and for which the risk value related to the traveling direction of the moving object is calculated as four points, to a range from 1500 mm to 3950 (4950-1000) mm from the top wall. Furthermore, as illustrated in FIG. 11(2), the change unit 127 changes the length from the bottom wall to the door of the vehicle on the vehicle side, which corresponds to the traveling direction of the moving object and for which the risk value related to the traveling direction of the moving object is calculated as three points, to 1000 mm.

As another example, when the vehicle model of "*****" is acquired as the information on the vehicle body, the change unit 127 firstly identifies dimensions of the vehicle body with the vehicle model of "*****" (an overall length is "4800 mm", a length from the top wall to the door is "1450 mm", a length from the bottom wall to the door is "950 mm", or the like). Subsequently, the change unit 127 changes the length from the top wall to the door of the vehicle on the vehicle side, which corresponds to the traveling direction of the moving object and for which the risk value related to the traveling direction of the moving object is calculated as three points, to 1450 mm.

Further, the change unit 127 changes a range in which the door is present on the vehicle side, which corresponds to the traveling direction of the moving object and for which the risk value related to the traveling direction of the moving object is calculated as four points, to a range from 1450 mm to 3850 (4800-950) mm from the top wall. Furthermore, the change unit 127 changes the length from the bottom wall to the door of the vehicle on the vehicle side, which corresponds to the traveling direction of the moving object and for which the risk value related to the traveling direction of the moving object is calculated as three points, to 950 mm.

An example of changing the setting of the risk value related to the position of the moving object will be described below. FIG. 12(1) is a bird's eye view for explaining the setting of the risk value related to the position of the moving object. FIG. 12(2) is a diagram illustrating a change of the setting of the risk value related to the position of the moving object. The setting of the risk related to the position of the moving object is made such that, as illustrated in FIG. 12(1), a value from zero to one is calculated in accordance with a distance between the vehicle (or the motion sensor) and the moving object.

Here, even when the moving object is present at the same distance from the vehicle, a degree of risk differs between a vehicle with a normal size and a vehicle with a larger (smaller) size than the normal size. Therefore, the change unit 127 identifies dimensions of the vehicle from the acquired information on the size of the vehicle, and changes the setting of the risk value related to the position of the moving object in accordance with the identified dimensions of the vehicle body.

More specifically, when the body type of "SUV (Sport Utility Vehicle)" is acquired as the information on the vehicle body, the change unit 127 firstly identifies general dimensions of the vehicle body (an overall length of "4300 mm") with the body type of "SUV".

Further, as illustrated in FIG. 12(2), the change unit 127 changes the setting so as to calculate the risk value related to the position of the moving object as one when the distance between the motion sensor and the moving object falls within a range from 0 cm to 80 cm, and calculate the risk value related to the position of the moving object such that the risk value related to the position of the moving object linearly decreases from one to zero with increase in the distance between the motion sensor and the moving object when the distance between the motion sensor and the moving object falls within a range from 80 cm to 160 cm.

An example for changing the setting of the risk value related to the traveling direction of the moving object and the setting of the risk value related to the position of the moving object in accordance with the mounting position of the motion sensor will be described below. The motion sensor may be installed inside or outside of the vehicle, such as a front pillar, a center pillar, a rear pillar, a rear-view mirror, a side mirror, a ceiling, a seat, or a rear window, depending on purpose, and therefore, when the mounting position of the motion sensor is changed, a positional relationship between the motion sensor and the vehicle body is changed, so that it is needed to change the setting of the risk value related to the traveling direction of the moving object and the setting of the risk value related to the position of the motion sensor, in accordance with the mounting position of the motion sensor.

Specifically, for example, when the motion sensor is mounted on the rearview mirror, the setting of the risk value related to the traveling direction of the moving object (FIG. 11(1)) and the setting of the risk value related to the position of the moving object (FIG. 12(1)) are made in accordance with the position of the rearview mirror; therefore, if the setting of the risk values is not changed in accordance a change of the mounting position of the motion sensor to the rear window, the risk value related to the traveling direction of the moving object and the risk value related to the position of the moving object are calculated with respect to coordinates that are displaced by a distance from the rearview mirror to the rear window.

To cope with this, the change unit 127 changes the setting of the risk value related to the traveling direction of the moving object and the setting of the risk value related to the position of the moving object, in accordance with the mounting position of the motion sensor. More specifically, when the mounting position of the motion sensor that is acquired by the acquisition unit 122 indicates "rear window", the change unit 127 changes the setting of the risk value related to the traveling direction of the motion sensor and the setting of the risk value related to the position of the moving object so as to cope with the coordinate position corresponding to the "rear window" as the mounting position of the motion sensor.

### 4. Flowchart

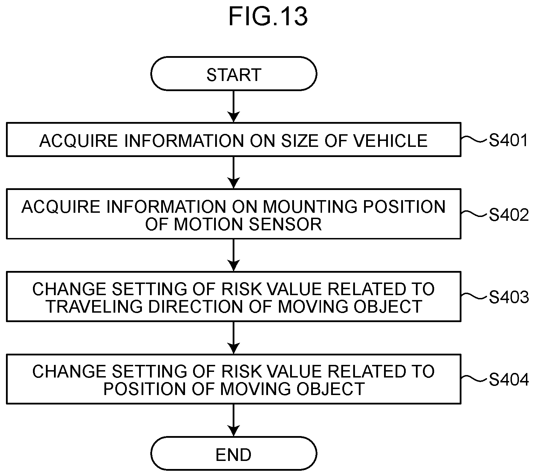

A process that is performed by the monitoring apparatus 100 configured as described above will be described below with reference to the flowchart in FIG. 13. FIG. 13 is a flowchart illustrating an example of a process that is performed by the monitoring apparatus 100 according to one embodiment. The flowchart in FIG. 13 is mainly executed by the control unit 120. Further, the flowchart may be implemented as a monitoring program by being configured as a program that is executed by the CPU that is included in the control unit 120. Meanwhile, Steps described below may be performed in different order, and some of processes may be omitted.

Firstly, the acquisition unit 122 acquires the information on the size of the vehicle (Step S401). For example, the acquisition unit 122 acquires information on the body type of "sedan". Subsequently, the acquisition unit 122 acquires the information on the mounting position of the motion sensor (Step S402). For example, the acquisition unit 122 acquires information on the "rearview mirror" as the mounting position of the motion sensor.

Then, the change unit 127 changes the setting of the risk value that is related to the traveling direction of the moving object and that is detected by the motion sensor, in accordance with the information that is acquired by the acquisition unit 122 (Step S403). For example, the change unit 127 changes the setting of the risk value that is related to the traveling direction of the moving object and that is detected by the motion sensor, in accordance with the information on the size of the vehicle that is acquired by the acquisition unit 122.

The change unit 127 changes the setting of the risk value related to the position of the moving object, in accordance with the information that is acquired by the acquisition unit 122 (Step S404). For example, the change unit 127 changes the setting of the risk value related to the position of the moving object, in accordance with the information on the size of the vehicle that is acquired by the acquisition unit 122.

### 5. Effects

The monitoring apparatus 100 according to one embodiment includes the acquisition unit 122 that acquires information on a size of a vehicle, and the change unit 127 that changes setting of a risk value that is related to a traveling direction of a moving object and that is detected by a motion sensor, in accordance with the information that is acquired by the acquisition unit 122.

With this configuration, the monitoring apparatus 100 is able to change the setting of the risk value that is related to the traveling direction of the moving object and that is detected by the motion sensor, in accordance with the information on the size of the vehicle, and determine presence or absence of danger to the vehicle with high accuracy.

In the monitoring apparatus 100 according to one embodiment, the information on the size of the vehicle is a body type. With this configuration, the monitoring apparatus 100 is able to change the setting of the risk value that is related to the traveling direction of the moving object and that is detected by the motion sensor, in accordance with the body type, and determine presence or absence of danger to the vehicle with high accuracy.

In the monitoring apparatus 100 according to one embodiment, the information on the size of the vehicle is a vehicle model. With this configuration, the monitoring apparatus 100 is able to change the setting of the risk value that is related to the traveling direction of the moving object and that is detected by the motion sensor, in accordance with the vehicle model, and determine presence or absence of danger to the vehicle with high accuracy.

The acquisition unit 122 of the monitoring apparatus 100 according to one embodiment acquires information on a mounting position of the motion sensor, in addition to the information on the size of the vehicle. With this configuration, the monitoring apparatus 100 is able to change the setting of the risk value that is related to the traveling direction of the moving object and that is detected by the motion sensor, in accordance with the information on the size of the vehicle and the information on the mounting position of the motion sensor, and determine presence or absence of danger to the vehicle with high accuracy.

The change unit 127 of the monitoring apparatus 100 according to one embodiment changes setting of the risk value related to the traveling direction of the moving object and setting of a risk value related to a position of the moving object, in accordance with the information that is acquired by the acquisition unit 122. With this configuration, the monitoring apparatus 100 is able to change the setting of the risk value that is related to the traveling direction of the moving object and that is detected by the motion sensor and the setting of the risk value related to the position of the moving object, in accordance with the information on the size of the vehicle, and determine presence or absence of danger to the vehicle with high accuracy.

### Modification

### 1. System configuration

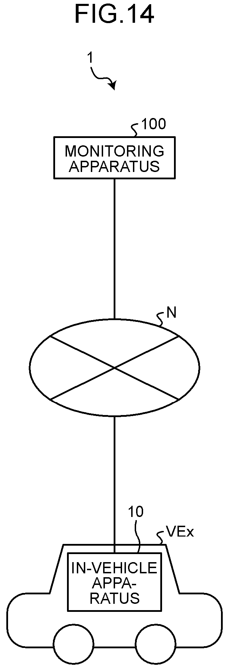

While the examples have been described in which the monitoring according to the first embodiment and the second embodiment is performed by only the monitoring apparatus 100 that is installed in the vehicle, modifications of the embodiments as described above will be described below. As one modification, an example will be described in which the monitoring according to the first embodiment and the second embodiment is realized by communication between the monitoring apparatus 100 that is provided on the cloud and the in-vehicle apparatus 10 that is installed in the vehicle. FIG. 14 is a diagram illustrating a configuration of a monitoring system according to one embodiment. FIG. 14 illustrates a monitoring system 1 as one example of the monitoring system according to one embodiment. Meanwhile, explanation of the same components as those of the first embodiment and the second embodiment will be omitted appropriately.

As illustrated in FIG. 14, the monitoring system 1 includes the in-vehicle apparatus 10 and the monitoring apparatus 100. Further, the in-vehicle apparatus 10 and the monitoring apparatus 100 are communicably connected to each other in a wired or wireless manned via a network N. Furthermore, the monitoring system 1 illustrated in FIG. 14 may include an arbitrary number of the in-vehicle apparatuses 10 and an arbitrary number of the monitoring apparatuses 100. Here, if the in-vehicle apparatus 10 is an edge computer that performs edge computing near a user, the monitoring apparatus 100 may be, for example, a cloud computer that performs a process on the cloud side. In other words, the monitoring apparatus 100 may be a server apparatus. In the present invention, as illustrated in FIG. 14, the monitoring apparatus 100 that is a server apparatus provided on the cloud and the in-vehicle apparatus 10 that is installed in the vehicle transmit and receive information to and from each other, so that the monitoring system 1 realize the monitoring according to one embodiment.

The in-vehicle apparatus 10 may be a dedicated sensor apparatus that is incorporated in or externally attached to a vehicle VEx, or may be a recording apparatus (drive recorder) or the like that is installed in the vehicle VEx as crime prevention measures or measures against tailgating.

Furthermore, the in-vehicle apparatus 10 may include a sensor apparatus and a notification apparatus. As one example, the in-vehicle apparatus 10 may be a composite apparatus in which a sensor apparatus and a notification apparatus that are independent of each other are communicably connected to each other. In addition, as another example, the in-vehicle apparatus 10 may be a single apparatus that has a sensor function and a notification function.

Moreover, the user may use a mobile terminal apparatus (for example, a smartphone, a table terminal, a notebook PC, a desktop PC, a PDA, or the like) that is used on a daily basis as the in-vehicle apparatus 10 by connecting a predetermined sensor to the mobile terminal apparatus and installing a predetermined application. For example, a mobile terminal apparatus that includes a predetermined sensor or that is connected to a predetermined sensor may be regarded as the in-vehicle apparatus 10 described herein. When the mobile terminal apparatus is used as the in-vehicle apparatus 10, the mobile terminal apparatus is arranged on, for example, a dashboard of the vehicle VEx at the time of driving.

Furthermore, the in-vehicle apparatus 10 may include various kinds of sensors. For example, the in-vehicle apparatus 10 may include various kinds of sensors, such as a distance sensor, a microwave sensor, a motion sensor such as LiDAR, a temperature sensor, a microphone, a positioning sensor such as a GNSS sensor or a GPS sensor, an acceleration sensor, a gyro sensor, an image capturing apparatus such as a camera, or various kinds of sensors such as a pressure sensor.

The monitoring apparatus 100 may acquire various kinds of data based on sensor information (for example, by analysis of the sensor information) that is detected by the above-described sensor. For example, the monitoring apparatus 100 acquires information on a moving object inside and outside the vehicle from the motion sensor. Further, for example, the monitoring apparatus 100 acquires temperature in the vehicle from the temperature sensor. Furthermore, for example, the monitoring apparatus 100 acquires voice from the microphone. Moreover, for example, the monitoring apparatus 100 acquires angular velocity from the gyro sensor. Furthermore, for example, the monitoring apparatus 100 acquires data of a moving image that is obtained by capturing an image of the outside from the inside of the vehicle VEx by the camera. Meanwhile, the monitoring apparatus 100 may acquire sensor information that is detected by a sensor that is installed in the vehicle VEx, in addition to the sensor information that is detected by the sensor that is installed in the in-vehicle apparatus 10.

### 2. Configuration of monitoring apparatus

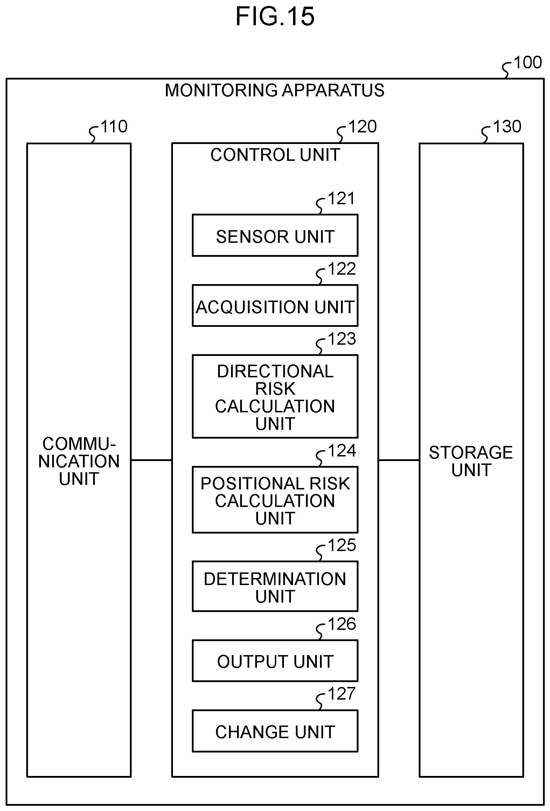

The monitoring apparatus 100 according to one embodiment will be described below with reference to FIG. 15. FIG. 15 is a diagram illustrating a configuration example of the monitoring apparatus 100 according to one embodiment. As illustrated in FIG. 15, the monitoring apparatus 100 includes the communication unit 110, the storage unit 130, and the control unit 120.

The control unit 120 is implemented by using a CPU, an NP, an FPGA, or the like, and executes a processing program that is stored in a memory. As illustrated in FIG. 15, the control unit 120 includes the acquisition unit 122, the directional risk calculation unit 123, the positional risk calculation unit 124, the determination unit 125, the output unit 126, and the change unit 127.

### Others

### 1. Hardware configuration

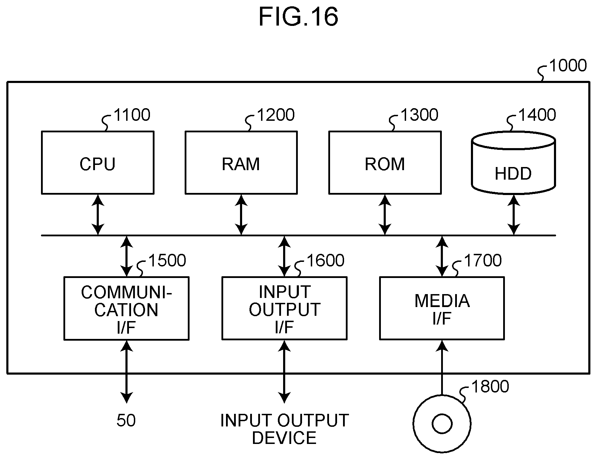

The monitoring apparatus 100 according to the embodiments and the modifications as described above is implemented by, for example, a computer 1000 that is configured as illustrated in FIG. 16. FIG. 16 is a hardware configuration diagram illustrating one example of a computer that implements functions of the monitoring apparatus 100. The computer 1000 includes a CPU 1100, a RAM 1200, a ROM 1300, an HDD 1400, a communication interface (I/F) 1500, an input output interface (I/F) 1600, and a media interface (I/F) 1700

The CPU 1100 operates based on a program that is stored in the ROM 1300 or the HDD 1400, and controls each of the units. The ROM 1300 stores therein a boot program that is executed by the CPU 1100 when the computer 1000 is activated, a program that is dependent on hardware of the computer 1000, or the like.

The HDD 1400 stores therein a program that is executed by the CPU 1100, data that is used by the program, or the like. The communication interface 1500 receives data from a different apparatus via a predetermined communication network, sends the data to the CPU 1100, and transmits data generated by the CPU 1100 to a different apparatus via a predetermined communication network.

The CPU 1100 controls an output device, such as a display or a printer, and an input device, such as a keyboard or a mouse, via the input output interface 1600. The CPU 1100 acquires data from the input device via the input output interface 1600. Further, the CPU 1100 outputs generated data to the output device via the input output interface 1600.

The media interface 1700 reads a program or data that is stored in a recording medium 1800, and provides the program or the data to the CPU 1100 via the RAM 1200. The CPU 1100 loads the program from the recording medium 1800 onto the RAM 1200 via the media interface 1700, and executes the loaded program. The recording medium 1800 is, for example, an optical recording medium, such as a Digital Versatile Disc (DVD) or a Phase change rewritable Disk (PD), a magneto-optical recording medium, such as a Magneto-Optical disk (MO), a tape medium, a magnetic recording medium, a semiconductor memory, or the like.

For example, when the computer 1000 functions as the monitoring apparatus 100 according to one embodiment, the CPU 1100 of the computer 1000 implements the functions of the control unit 120 by executing the program that is loaded on the RAM 1200. The CPU 1100 of the computer 1000 reads the program from the recording medium 1800 and executes the program; however, as another example, it may be possible to acquire the program from a different apparatus via a predetermined communication network.

### 2. Others

While the exemplary embodiments of the present invention have been described above, the present invention is not limited by the embodiments as described above. In other words, a person skilled in the art may make various modifications within the scope of the present invention in accordance with conventionally known knowledge. The modifications are, of course, included in the scope of the present invention as long as the monitoring apparatus according to the present invention is included.

### Reference Signs List

- 1: monitoring system
- 10: in-vehicle apparatus
- 100: monitoring apparatus
- 110: communication unit
- 120: control unit
- 121: sensor unit
- 122: acquisition unit
- 123: directional risk calculation unit
- 124: positional risk calculation unit
- 125: determination unit
- 126: output unit
- 127: change unit
- 130: storage unit

## Claims

1. A monitoring apparatus comprising:
an acquisition unit that acquires coordinates of a moving object that are identified based on information that is detected by a motion sensor that is installed in a vehicle;
a directional risk calculation unit that calculates a risk value related to a traveling direction of the moving object based on the coordinates of the moving object that are acquired by the acquisition unit; and
a determination unit that determines presence or absence of danger in accordance with the risk value that is related to the traveling direction of the moving object and that is calculated by the directional risk calculation unit.

2. The monitoring apparatus according to claim 1, further comprising:
a positional risk calculation unit that calculates a risk value related to a position of the moving object based on the coordinates of the moving object that are acquired by the acquisition unit, wherein
the determination unit determines presence or absence of the danger in accordance with the risk value that is related to the traveling direction of the moving object and that is calculated by the directional risk calculation unit and the risk value that is related to the position of the moving object and that is calculated by the positional risk calculation unit.

3. The monitoring apparatus according to claim 2, wherein the determination unit, when determining that the danger is present, determines a behavior of the moving object in accordance with the risk value that is related to the traveling direction of the moving object and that is calculated by the directional risk calculation unit and the risk value that is related to the position of the moving object and that is calculated by the positional risk calculation unit.

4. The monitoring apparatus according to claim 2, wherein the positional risk calculation unit calculates the risk value related to the position of the moving object such that a risk related to the position of the moving object linearly decreases with increase in a distance between the motion sensor and the moving object in a predetermined distance range between the motion sensor and the moving object.

5. The monitoring apparatus according to claim 2, wherein the determination unit, when determining that the danger is present, determines that the behavior of the moving object is approach when an integrated value of the risk value that is related to the traveling direction of the moving object and that is calculated by the directional risk calculation unit and the risk value that is related to the position of the moving object and that is calculated by the positional risk calculation unit is equal to or larger than a first threshold and smaller than a second threshold, and determines that the behavior of the moving object is reconnaissance when the integrated value exceeds the second threshold.

6. The monitoring apparatus according to claim 5, wherein the determination unit changes the first threshold and the second threshold in accordance with a place where the vehicle including the motion sensor is located.

7. The monitoring apparatus according to claim 5, wherein the determination unit changes the first threshold and the second threshold in accordance with time.

8. The monitoring apparatus according to claim 1, further comprising:
an output unit that performs predetermined output in accordance with the behavior of the moving object that is determined by the determination unit.

9. A monitoring method that is implemented by a monitoring apparatus, the method comprising:
acquiring coordinates of a moving object that are identified based on information that is detected by a motion sensor that is installed in a vehicle;
calculating a risk value related to a traveling direction of the moving object based on the coordinates of the moving object that are acquired at the acquiring; and
determining presence or absence of danger in accordance with the risk value that is related to the traveling direction of the moving object and that is calculated at the calculating.

10. A monitoring program that causes a computer to execute:
acquiring coordinates of a moving object that are identified based on information that is detected by a motion sensor that is installed in a vehicle;
calculating a risk value related to a traveling direction of the moving object based on the coordinates of the moving object that are acquired at the acquiring; and
determining presence or absence of danger in accordance with the risk value that is related to the traveling direction of the moving object and that is calculated at the calculating.
